# EUROPEAN PATENT SPECIFICATION

(11) **EP 1 273 522 B1**
(45) Date of publication and mention of the grant of the patent: **24.11.2004**
(21) Application number: 02254343.3
(22) Date of filing: 21.06.2002
(51) Int. Cl.: B65B 61/24

(54) **Distributing apparatus**
Verteilungsvorrichtung
Dispositif de distribution

(30) Priority: 03.07.2001 GB 0116266; 11.07.2001 GB 0116941
(43) Date of publication of application: 08.01.2003
(73) Proprietor: ISHIDA EUROPE LIMITED, Birmingham B32 3DB (GB)
(72) Inventor: Bennett, Robert, Walsall, West Midlands WS3 4EQ (GB)
(74) Representative: Skone James, Robert Edmund

(56) References cited:
- EP-A- 0 667 289
- WO-A-95/32123
- GB-A- 2 050 987

## Description

The invention relates to apparatus for evenly distributing loose articles within a package of the kind comprising a conveyor means for conveying and agitating the package; and pressing means for pressing on the package during agitation to smooth it. Such apparatus is hereinafter referred to as of the kind described.

Apparatus of the kind described is illustrated in WO-A-95/32123 upon which the preamble of claim 1 is based. In this arrangement, the conveyor means comprises an elongate conveyor belt mounted on rollers which have one or more surface eccentricities so that they serve to agitate the package as it is being conveyed. We have found that although some distribution of articles within packages take place, a faster and more efficient process is required.

Consequently, we have developed, in accordance with the present invention, apparatus of the kind described which is characterised in that the conveyor means comprises a sequence of driven rollers located side-by-side in the conveying direction, at least some of the rollers being tapered in mutually opposed senses.

The combined action of the pressing means and the undulating surface of the rollers causes the package or bag to undergo conditioning, this displaces the product inside the bag and also smoothes out the bag removing creases and deformations making the bags consistent in shape with an even spread of contents. This allows the bags to be processed or handled better down stream by such equipment as pick and place systems or seal testing equipment. The latter requires product settling to give the seal tester the best possible chance of doing a hood test especially if the test takes the form of a plate, roller plate or a flat belt which is placed on the bag to check the high under pressure for a duration of time and also reduces the risk of damage to the article. If the product is bunched together in one area of the bag or a large piece of product is sticking up, this test is compromised and may even result in a broken bag. The invention greatly reduces the chances of this.

The apparatus can receive a large variation in package size and height without the need to adjust. The roller bed allows the removal of debris from broken bags or product from a previous process. To assist this the rollers on the infeed could be spaced wider to allow larger particles to fall through. The unit also can stabilize bags, because of the mangle effect of the unit, bags can be bouncing about on entry but are stable on leaving.

An example of apparatus according to the invention will now be described with reference to the accompanying drawings, in which:-
Figure 1 is a schematic side elevation of the apparatus;

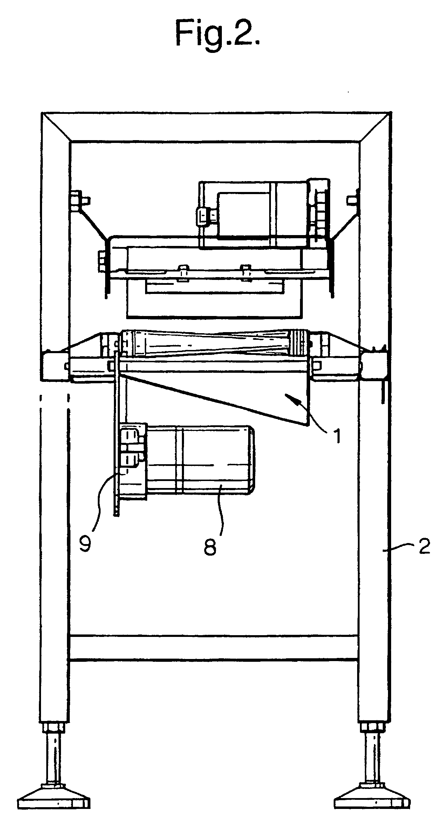

Figure 2 is a schematic end view of the apparatus;
Figure 3 is a plan of the roller bed of the apparatus; and,
Figure 4 illustrates three of the rollers of the roller bed in more detail.

In this embodiment of the present invention, the apparatus for conditioning packages is designed so that it can be incorporated into a production line.

The apparatus comprises a frame 2 supporting a conveyor 1 which is provided to convey packages or bags (typically of the flexible pillow type) in a horizontal direction. The conveyor 1 provides a surface which the packages, such as packets 12 of snack foods, can rest on.

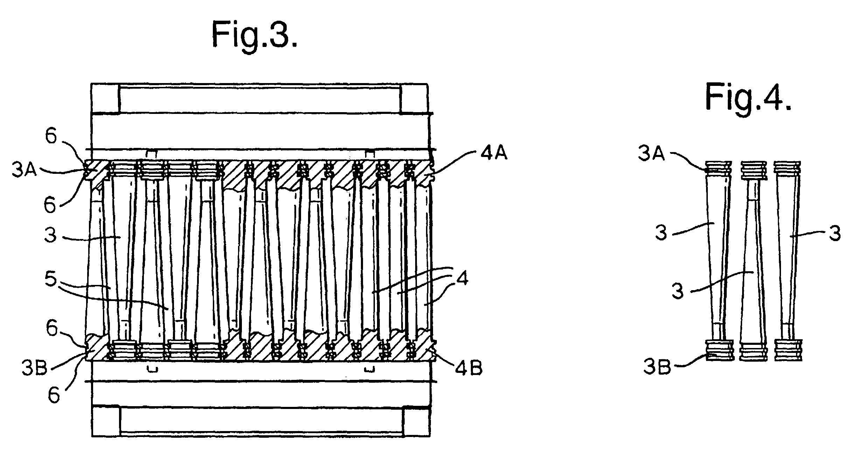

The conveyor 1 comprises a set of tapered rollers 3 (shown in more detail in Figures 3 and 4) and a set of three cylindrical rollers 4 at the upstream end of the conveyor 1. As can be seen in Figures 3 and 4, the tapered rollers 3 are arranged such that adjacent rollers have their tapers in mutually opposed senses and with gaps 5 formed between them. Any debris generated during passage of packages 12 through the apparatus will then drop down through these gaps 5 and can be collected in a bin (not shown).

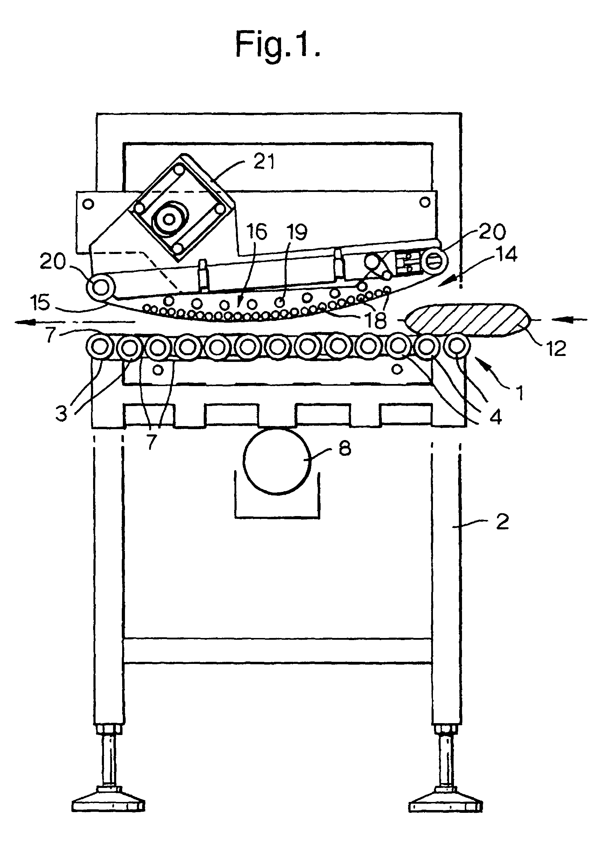

Each end of each roller 3,4 is formed by a cylindrical boss 3A,3B,4A,4B, each being provided with a pair of grooves 6. In order to couple drive to all the rollers, adjacent pairs of rollers are linked by a drive belt located in respective, parallel grooves in adjacent bosses 3A and 4A or 3B and 4B. In the preferred arrangement, both ends of each roller are linked by a drive belt for additional security. The drive belts can be seen in Figure 1 where they are indicated at 7.

The rollers 3,4 are driven by a motor 8 coupled via a belt 9 to the endmost roller 4 so that when activated, the motor will drive the endmost roller 4 which in turn, via the belts 7 will cause all the other rollers 3,4 in the conveyor 1 to be driven in the feed direction.

As the packages 12 are conveyed along the conveyor 1, they will be agitated both in the feed direction and orthogonal to the feed direction as a result of the tapered nature of the rollers 3 and thus cause redistribution of loose articles within the package. The packages undergo a waddling action as they are conveyed.

Typically dimensions for the tapered rollers are: a diameter ranging from 50mm at the thick end down to 25mm at the thin end over a length of about 200mm, while a typical feed rate is 50-65m/min, preferably 60m/min.

Although the agitation of the surface of the belt provides the energy for the articles to move within the package, a means of gently smoothing the package is useful for even distribution.

It is important that this smoothing of the package is not so severe as to crush the articles or damage the package.

In order to achieve this, another conveyor 14 is located above the first conveyor 1. This overhead conveyor 14 is fitted with an elasticated conveyor belt 15 so that it can be stretched to hang down from the pulleys 20.

To stretch the conveyor belt 15 in a downward direction a catenary pressing element 16 is provided, here taking the form of a series of transversely-elongate platform weights 19 pivotally linked to one another edge-to-edge, positioned within the conveyor 14 and supported at either end by fixed supports (not shown). It hangs from its supports substantially in a catenary and rests on the inside of the lower run of the elasticated conveyor belt 15 via a series of low-friction rollers 18, e.g. as are currently available commercially as a "low back line pressure" conveyor chain eg from Rexnord or Unichain. The belt 15 is driven by a motor 21.

The overhead conveyor 14 and the lower conveyor 1 are set to run at substantially the same speed to aid in the redistribution.

Although two motors have been used in this example, it would also be possible to use a single motor in place of the motors 8,21 to drive both conveyor 1 and the belt 15.

## Claims

1. Apparatus for evenly distributing loose articles within a package (12) comprising
conveyor means (1) for conveying and agitating the package (12); and
pressing means (16) for pressing on the package during agitation to smooth it, **characterised in that** the conveyor means (1) comprises a sequence of driven rollers (3,4) located side-by-side in the conveying direction, at least some of the rollers (3) being tapered in mutually opposed senses.

2. Apparatus according to claim 1, wherein each roller is tapered in an opposite sense to the immediately adjacent rollers.

3. Apparatus according to claim 1 or claim 2, wherein one or more cylindrical rollers (4) are provided at an upstream end of the conveyor means to feed packages to the tapered rollers.

4. Apparatus according to claim 3, wherein the cylindrical roller(s) (4) are commonly driven with the tapered rollers.

5. Apparatus according to any of the preceding claims, wherein the tapered rollers (3) are spaced apart to leave gaps (5) through which debris can fall.

6. Apparatus according to any of the preceding claims, wherein the rollers (3) are drivingly linked in pairs.

7. Apparatus according to any preceding claim wherein the pressing means (16) is flexible.

8. Apparatus according to any preceding claim wherein the pressing means (16) comprises a weighted flexible layer (15) which contacts the package from above.

9. Apparatus according to claim 8 wherein the pressing means comprises a flexible sheet (15) acted on from above by a series of weights (19) having mutual independence of movement.

10. Apparatus according to claim 9, wherein the series of weights (19) act on the sheet via second rollers (18).

11. Apparatus according to any preceding claim wherein the portion of the pressing means (16) which contacts packages in use is arranged to be moveable in the conveying direction to reduce possible damaging interference with the package during contact.

12. Apparatus according to any of the preceding claims, wherein the pressing means (16) is in the form of a catenary.

## Patentansprüche

1. Gerät zum gleichmäßigen Verteilen loser Produkte innerhalb einer Verpackung (12) mit
einer Fördereinrichtung (1) zum Fördern und Hin- und Herbewegen der Verpackung (12); und
einer Drückeinrichtung (16) zum Drücken der Verpackung während der Hin- und Herbewegung, um sie zu glätten,
**dadurch gekennzeichnet, dass**
die Fördereinrichtung (1) eine Folge von angetriebenen Rollen (3, 4) umfasst, die Seite an Seite in der Förderrichtung angeordnet sind, wobei zumindest einige der Rollen (3) im gegenseitig gegenüberliegenden Sinn konisch sind.

2. Gerät gemäß Anspruch 1, wobei jede Rolle in einem gegenüberliegenden Sinn an die direkt angrenzende Rolle konisch ist.

3. Gerät gemäß Anspruch 1 oder 2, wobei eine oder mehrere zylindrische Rollen (4) an einem stromaufwärtigen Ende der Fördereinrichtung angeordnet sind, um Verpackungen zu den konischen Rollen zuzuführen.

4. Gerät gemäß Anspruch 3, wobei die zylindrische(n) Rolle(n) (4) gemeinsamen mit den konischen Rollen angetrieben sind.

5. Gerät gemäß jedem der vorangehenden Ansprüche, wobei die konischen Rollen (3) voneinander beabstandet sind, um Zwischenräume (5) frei zu lassen, durch die Überreste fallen können.

6. Gerät gemäß jedem der vorangehenden Ansprüche, wobei die Rollen (3) antreibend in Paaren verknüpft sind.

7. Gerät gemäß jedem der vorangehenden Ansprüche, wobei die Drückeinrichtung (16) flexibel ist.

8. Gerät gemäß jedem der vorangehenden Ansprüche, wobei die Drückeinrichtung (16) eine gewichtete flexible Schicht (15) umfasst, die die Verpackung von oben berührt.

9. Gerät gemäß Anspruch 8, wobei die Drückeinrichtung eine flexible Folie (15) umfasst, auf die durch eine Serie von Gewichten (19) von oben gewirkt wird, die eine gegenseitige Unabhängigkeit der Bewegung aufweisen.

10. Gerät gemäß Anspruch 9, wobei die Serie von Gewichten (19) über zweite Rollen (18) auf die Folie wirkt.

11. Gerät gemäß jedem der vorangehenden Ansprüche, wobei der Abschnitt der Drückeinrichtung (16), der die Verpackungen in Verwendung berührt, angeordnet ist, in der Förderrichtung beweglich zu sein, um ein mögliches beschädigendes Zusammenstoßen mit der Verpackung während der Berührung zu verhindern.

12. Gerät gemäß jedem der vorangehenden Ansprüche, wobei die Drückeinrichtung (16) in Form einer Kettenlinie ausgebildet ist.

## Revendications

1. Dispositif servant à répartir de façon homogène des articles en vrac dans un paquet (12) comprenant :
un moyen de transport (1) pour transporter et agiter le paquet (12) ; et
un moyen de pressage (16) pour exercer une pression sur le paquet pendant l'agitation afin de l'égaliser, **caractérisé en ce que** le moyen de transport (1) comprend une séquence de rouleaux entraînés (3, 4) situés côte à côte dans la direction de transport, au moins certains des rouleaux (3) étant coniques dans des sens mutuellement opposés.

2. Dispositif selon la revendication 1, dans lequel chaque rouleau est effilé dans un sens opposé aux rouleaux immédiatement voisins.

3. Dispositif selon la revendication 1 ou 2, dans lequel un ou plusieurs rouleaux cylindriques (4) sont prévus à une extrémité amont du moyen de transport pour amener les paquets aux rouleaux coniques.

4. Dispositif selon la revendication 3, dans lequel le(s) rouleau(x) cylindrique(s) (4) sont entraînés en commun avec les rouleaux coniques.

5. Dispositif selon l'une quelconque des revendications précédentes, dans lequel les rouleaux coniques (3) sont espacés pour laisser des interstices (5) par lesquels des débris peuvent tomber.

6. Dispositif selon l'une quelconque des revendications précédentes, dans lequel les rouleaux (3) sont liés en rotation par paires.

7. Dispositif selon l'une quelconque des revendications précédentes, dans lequel le moyen de pressage (16) est flexible.

8. Dispositif selon l'une quelconque des revendications précédentes, dans lequel le moyen de pressage (16) comprend une couche flexible lestée (15) qui touche le paquet par le dessus.

9. Dispositif selon la revendication 8, dans lequel le moyen de pressage comprend une feuille flexible (15) sur laquelle agissent, par le dessus, une série de poids (19) ayant une indépendance de mouvement mutuelle.

10. Dispositif selon la revendication 9, dans lequel les poids (19) agissent sur la feuille via des deuxièmes rouleaux (18).

11. Dispositif selon l'une quelconque des revendications précédentes, dans lequel la partie du moyen de pressage (16) qui touche les paquets en utilisation est adaptée pour être mobile dans la direction de transport afin de réduire la possible interférence préjudiciable au paquet pendant le contact.

12. Dispositif selon l'une quelconque des revendications précédentes, dans lequel le moyen de pressage (16) est sous la forme d'une chaînette.
